# EUROPEAN PATENT APPLICATION

(11) **EP 4 600 854 A1**
(43) Date of publication of application: **13.08.2025**
(21) Application number: 23884229.8
(22) Date of filing: 28.06.2023
(51) Int. Cl.: G06F 21/55

(54) **RANSOMWARE DETECTION METHOD AND APPARATUS**

(30) Priority: 31.10.2022 CN 202211345289
(71) Applicant: Huawei Technologies Co., Ltd., Shenzhen, Guangdong 518129 (CN)
(72) Inventor: SUN, Xiaowei, Shenzhen, Guangdong 518129 (CN); ZHANG, Wen, Shenzhen, Guangdong 518129 (CN); CHENG, Xiangjun, Shenzhen, Guangdong 518129 (CN); HU, Gang, Shenzhen, Guangdong 518129 (CN); CHEN, Keyun, Shenzhen, Guangdong 518129 (CN)
(74) Representative: MERH-IP Matias Erny Reichl Hoffmann Patentanwälte PartG mbB
(86) International application number: PCT/CN2023/103208
(87) International publication number: WO 2024/093290

(57) **Abstract**

This application discloses a ransomware detection method and apparatus, and belongs to the field of storage technologies. A computer device creates a first snapshot of a storage system at a first moment at which an abnormal operation behavior for the storage system is detected (401); creates a second snapshot of the storage system at a second moment at which it is determined that the storage system meets an attack detection condition; and then determines, based on a result of comparison between the first snapshot and the second snapshot and data content of one or more groups of operation abnormality data generated by the storage system between the first moment and the second moment, whether the storage system is attacked by ransomware (403). **In** this application, whether the storage system is attacked by ransomware is comprehensively determined based on comparison between snapshots of the storage system at different moments and data content of operation abnormality data generated due to a single abnormal operation behavior, so that a ransomware attack behavior can be effectively detected, and false ransomware detection can also be reduced.

## Description

This application claims priority to Chinese Patent Application No. 202211345289.1, filed on October 31, 2022 and entitled "RANSOMWARE DETECTION METHOD AND APPARATUS", which is incorporated herein by reference in its entirety.

### TECHNICAL FIELD

This application relates to the field of storage technologies, and in particular, to a ransomware detection method and apparatus.

### BACKGROUND

Ransomware is a type of malicious software that uses a strong encryption algorithm such as an advanced encryption standard (advanced encryption standard, AES) algorithm or an RSA (rivest-shamir-adleman) algorithm to encrypt user data, making it impossible to recover and access data except for paying ransom to obtain a key. If the ransom is not paid within a specified period of time, the file data is lost permanently, or the data may not be recovered even if the ransom is paid.

The large-scale outbreak of ransomware brings great harm to enterprises, governments, organizations, and individuals, causing huge economic losses, and has become one of the most serious threats to internet security. Therefore, how to effectively perform ransomware detection in time is the prerequisite and key for timely isolation, protection, and quick recovery of user data to implement real-time security protection for the user data.

### SUMMARY

This application provides a ransomware detection method and apparatus, to implement effective ransomware detection.

According to a first aspect, a ransomware detection method is provided. The method is applied to a computer device. The method includes: creating a first snapshot of a storage system at a first moment at which an abnormal operation behavior for the storage system is detected; creating a second snapshot of the storage system at a second moment at which it is determined that the storage system meets an attack detection condition, where the second moment is after the first moment; and determining, based on a result of comparison between the first snapshot and the second snapshot and data content of one or more groups of operation abnormality data generated by the storage system between the first moment and the second moment, whether the storage system is attacked by ransomware, where one group of operation abnormality data is generated by one abnormal operation behavior for the storage system.

In this application, whether the storage system is attacked by ransomware is comprehensively determined based on comparison between snapshots of the storage system at different moments and data content of operation abnormality data generated due to a single abnormal operation behavior. Based on the data content of the operation abnormality data, it may be determined whether the operation abnormality data meets a condition of being attacked by ransomware. If the operation abnormality data meets the condition of being attacked by ransomware, it is determined that the storage system may be attacked by ransomware. In addition, ransomware usually attacks one storage system a plurality of times within a short period of time, causing a large amount of data in the storage system to be infected. Therefore, comparison between snapshots of the storage system at different moments can assist in determining, based on an overall data change in the storage system within a period of time, whether a ransomware attack behavior, a data feature, or a user encryption behavior causes operation abnormality data to meet the condition of being attacked by ransomware. In the solution of this application, a ransomware attack behavior can be effectively detected, and false ransomware detection can also be reduced, so that ransomware detection accuracy and reliability are high.

Optionally, that the storage system meets an attack detection condition includes: duration starting from the first moment reaches a duration threshold, or a quantity of abnormal operation behaviors for the storage system from the first moment reaches a quantity threshold. In other words, after creating the first snapshot of the storage system at the first moment, the computer device creates the second snapshot of the storage system after the quantity of abnormal operation behaviors for the storage system reaches the quantity threshold or the duration reaches the duration threshold.

Optionally, a specific implementation in which the computer device determines, based on a result of comparison between the first snapshot and the second snapshot and data content of one or more groups of operation abnormality data generated by the storage system between the first moment and the second moment, whether the storage system is attacked by ransomware includes: When the result of comparison between the first snapshot and the second snapshot meets a first abnormality condition, and at least one group of detection abnormality data exists in the one or more groups of operation abnormality data generated by the storage system between the first moment and the second moment, the computer device determines that the storage system is attacked by ransomware, where one group of detection abnormality data is one group of operation abnormality data whose data content meets a second abnormality condition.

Optionally, after determining that the storage system is attacked by ransomware, the computer device stores the first snapshot, and deletes the second snapshot.

In this application, after determining that the storage system is attacked by ransomware, the computer device may store, as a secure snapshot, the first snapshot that is first generated. **In** this way, data that is damaged after the first moment can be protected, and data security protection is implemented by backing up data of the storage system.

Optionally, after determining that the storage system is attacked by ransomware, the computer device outputs an alarm prompt, where the alarm prompt indicates that the storage system is attacked by ransomware, and the alarm prompt includes one or more of a tenant name of the detection abnormality data, a storage location of the detection abnormality data, or an infection time of the detection abnormality data.

In this application, after determining that the storage system is attacked by ransomware, the computer device may output the alarm prompt, so that an operation and maintenance engineer or a user quickly locates an attacked object, and performs security protection on data to cope with the ransomware attack.

Optionally, another specific implementation in which the computer device determines, based on a result of comparison between the first snapshot and the second snapshot and data content of one or more groups of operation abnormality data generated by the storage system between the first moment and the second moment, whether the storage system is attacked by ransomware includes: When the result of comparison between the first snapshot and the second snapshot does not meet a first abnormality condition, or the one or more groups of operation abnormality data generated by the storage system between the first moment and the second moment are all detection normality data, the computer device determines that the storage system is not attacked by ransomware, where one group of detection normality data is one group of operation abnormality data whose data content does not meet a second abnormality condition.

Optionally, after determining that the storage system is not attacked by ransomware, the computer device deletes the first snapshot and the second snapshot. Snapshot deletion can release storage space and reduce storage resource usage.

Optionally, the result of comparison between the first snapshot and the second snapshot includes a difference between an entropy value of the second snapshot and an entropy value of the first snapshot, and the first abnormality condition includes: the difference is greater than a difference threshold. In other words, that the result of comparison between the first snapshot and the second snapshot meets a first abnormality condition may be that the difference between the entropy value of the second snapshot and the entropy value of the first snapshot is greater than the difference threshold.

The entropy value is used to reflect data uncertainty. Larger data uncertainty indicates a higher entropy value. Uncertainty of encrypted data is higher than that of non-encrypted data. Therefore, an entropy value of the encrypted data is higher than that of the non-encrypted data. An encryption situation of data in the storage system in interval duration of generating two snapshots may be determined through comparison of entropy values of the snapshots of the storage system at different moments. If a difference between the entropy values of the two snapshots is greater than the difference threshold, it indicates that a large amount of data in the storage system is encrypted in the interval duration, and it is very likely that the storage system is attacked by ransomware. If the difference between the entropy values of the two snapshots is less than or equal to the difference threshold, even if the entropy values of the two snapshots are both large, it only indicates that there is a large amount of encrypted data in original data of the storage system, and it is not determined that the storage system is attacked by ransomware. This can avoid a misjudgment caused because the original data in the storage system is encrypted. In addition, when encrypting data in the storage system, the user usually does not encrypt a large amount of data in a short period of time, like ransomware. Therefore, an entropy value of a snapshot of the storage system does not increase rapidly in a short period of time, so that a misjudgment caused by a user encryption behavior can be very probably avoided through comparison between snapshots of the storage system at different moments.

Optionally, the computer device invokes a machine learning model to separately determine the entropy value of the first snapshot and the entropy value of the second snapshot.

Optionally, the second abnormality condition is that data content is encrypted. In other words, one group of operation abnormality data whose data content is encrypted is detection abnormality data. One group of operation abnormality data whose data content is not encrypted is one group of detection normality data.

In this application, the computer device may determine, based on data content of operation abnormality data, whether the operation abnormality data is encrypted data; and if the operation abnormality data is encrypted data, determine that the storage system may be attacked by ransomware.

Optionally, the computer device obtains an operation sequence of a plurality of consecutive operations for one group of data in the storage system, where the plurality of consecutive operations include a read operation, a write operation, a rename operation, a create operation, or a delete operation. When the operation sequence matches a preset ransomware operation sequence pattern, the computer device determines the plurality of consecutive operations as the abnormal operation behaviors, and uses one group of data on which the plurality of consecutive operations have been performed as one group of operation abnormality data.

According to a second aspect, a ransomware detection apparatus is provided. The apparatus includes a plurality of function modules, and the plurality of function modules interact with each other, to implement the method according to the first aspect and the implementations of the first aspect. The plurality of function modules may be implemented based on software, hardware, or a combination of software and hardware, and the plurality of function modules may be randomly combined or divided based on specific implementation.

According to a third aspect, a computer device is provided, including a processor and a memory.

The memory is configured to store a computer program, where the computer program includes program instructions.

The processor is configured to invoke the computer program, to implement the method according to the first aspect and the implementations of the first aspect.

According to a fourth aspect, a storage system is provided, including a controller and a storage medium. The storage medium is configured to store data, and the controller is configured to read the data from the storage medium, to perform the method according to the first aspect and the implementations of the first aspect.

According to a fifth aspect, a computer-readable storage medium is provided. The computer-readable storage medium stores instructions, and when the instructions are executed by a processor, the method according to the first aspect and the implementations of the first aspect is implemented.

According to a sixth aspect, a computer program product is provided, including a computer program. When the computer program is executed by a processor, the method according to the first aspect and the implementations of the first aspect is implemented.

According to a seventh aspect, a chip is provided. The chip includes a programmable logic circuit and/or program instructions. When the chip runs, the method according to the first aspect and the implementations of the first aspect is implemented.

### BRIEF DESCRIPTION OF DRAWINGS

FIG. 1 is a diagram of an architecture of a ransomware detection system according to an embodiment of this application;
FIG. 2 is a diagram of an architecture of another ransomware detection system according to an embodiment of this application;
FIG. 3 is a diagram of an architecture of still another ransomware detection system according to an embodiment of this application;
FIG. 4 is a schematic flowchart of a ransomware detection method according to an embodiment of this application;
FIG. 5 is a diagram of a structure of a ransomware detection apparatus according to an embodiment of this application;
FIG. 6 is a diagram of a structure of another ransomware detection apparatus according to an embodiment of this application;
FIG. 7 is a diagram of a structure of still another ransomware detection apparatus according to an embodiment of this application;
FIG. 8 is a diagram of a structure of yet another ransomware detection apparatus according to an embodiment of this application;
FIG. 9 is a diagram of a structure of still yet another ransomware detection apparatus according to an embodiment of this application;
FIG. 10 is a diagram of a hardware structure of a computer device according to an embodiment of this application; and
FIG. 11 is a diagram of a structure of a storage system according to an embodiment of this application.

### DESCRIPTION OF EMBODIMENTS

To make the objectives, technical solutions, and advantages of this application clearer, the following further describes the implementations of this application in detail with reference to the accompanying drawings.

Ransomware is essentially a type of malicious software that makes a computer of a victim or a specific file unavailable or unreadable. Only when the victim pays the ransom can it be possible to obtain a key used to restore the computer or decrypt an encrypted file. After a ransomware attack, personal data may be lost, or even enterprise services may be interrupted. Building an anti-ransomware system to implement real-time security protection for user data is an important technical means in urgent need of the market, which has great market prospect and commercial value.

The key to building the anti-ransomware system is how to effectively detect ransomware in time. The conventional technology provides a ransomware detection method. An input/output (input/output, I/O) operation on a storage system is collected in real time. First, a detection algorithm is used to preliminarily check whether an abnormal I/O behavior exists in the I/O operation on the storage system. If an abnormal I/O behavior exists, a file generated due to the abnormal I/O behavior is obtained and it is checked whether the file is an encrypted file. If the file is an encrypted file, the file is determined as an abnormal file attacked by ransomware. In this case, a snapshot of a file system in which the abnormal file resides is generated and an alarm is sent to a user. However, if a file in the storage system is an encrypted file, the file cannot be separated from an activity area of ransomware, which may cause a false positive. If the user is encrypting a file in the storage system, a false positive may occur because the encryption behavior is similar to that of ransomware. Therefore, ransomware detection reliability in the conventional technology is low.

In view of this, this application provides a ransomware detection method. In this application, a first snapshot of a storage system is created at a first moment at which an abnormal operation behavior for the storage system is detected; a second snapshot of the storage system is created at a second moment at which the storage system meets an attack detection condition; and then it is determined, based on a result of comparison between the first snapshot and the second snapshot and data content of one or more groups of operation abnormality data generated by the storage system between the first moment and the second moment, whether the storage system is attacked by ransomware, where one group of operation abnormality data is generated by one abnormal operation behavior for the storage system. In this application, whether the storage system is attacked by ransomware is comprehensively determined based on comparison between snapshots of the storage system at different moments and data content of operation abnormality data generated due to a single abnormal operation behavior. Based on the data content of the operation abnormality data, it may be determined whether the operation abnormality data meets a condition of being attacked by ransomware. If the operation abnormality data meets the condition of being attacked by ransomware, it is determined that the storage system may be attacked by ransomware. That the operation abnormality data meets the condition of being attacked by ransomware may mean that the operation abnormality data is encrypted data. In addition, ransomware usually attacks one storage system a plurality of times within a short period of time, causing a large amount of data in the storage system to be infected. Therefore, comparison between snapshots of the storage system at different moments can assist in determining, based on an overall data change in the storage system within a period of time, whether a ransomware attack behavior, a data feature, or a user encryption behavior causes operation abnormality data to meet the condition of being attacked by ransomware. In the solution of this application, a ransomware attack behavior can be effectively detected, and false ransomware detection can also be reduced. Compared with the conventional technology, this improves ransomware detection accuracy and reliability.

The following describes technical solutions of this application in detail from a plurality of perspectives such as a system, a method procedure, a virtual apparatus, and a hardware apparatus.

The following describes a system in embodiments of this application by using an example.

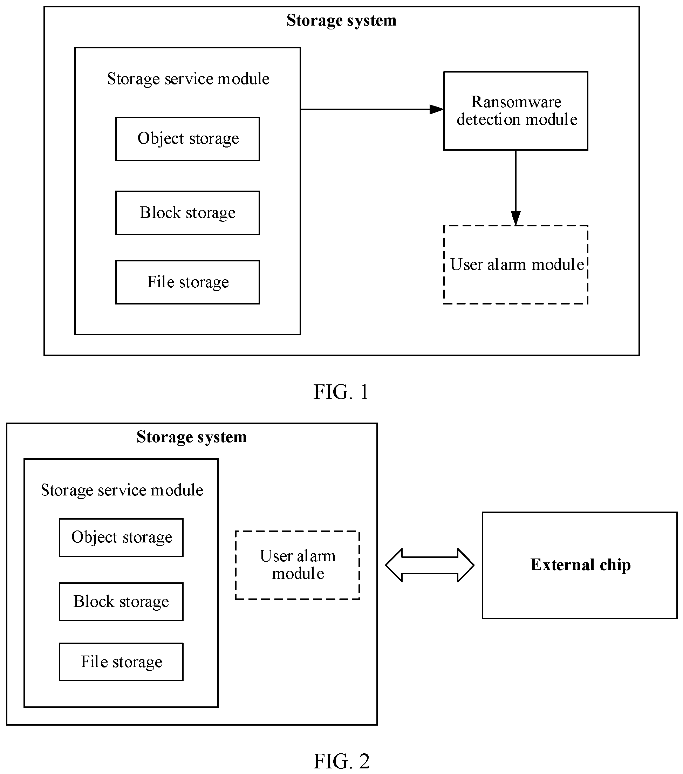

For example, FIG. 1 is a diagram of an architecture of a ransomware detection system according to an embodiment of this application. The system may be a storage system. As shown in FIG. 1, the storage system includes a storage service module and a ransomware detection module. The storage service module is mainly configured to store data, and perform a series of operations on the data, such as read and write, and some advanced features related to data operations. A storage service provided by the storage service module includes but is not limited to object storage, block storage, or file storage. The ransomware detection module is configured to deploy a ransomware detection method provided in this application, to discover a ransomware behavior in time. Optionally, the storage system further includes a user alarm module. The user alarm module is mainly used by an administrator to manage the storage system. For example, the user alarm module can output an alarm prompt.

In the storage system shown in FIG. 1, the ransomware detection module may be deployed in a container manner. For example, the storage system includes a pod for deploying a protect manager (protect manager, PM) (POD-PM for short) and a pod for deploying a data enable engineer (data enable engineer, DEE) (POD-DEE for short). The pod is software for carrying and managing a container, and may be deployed on a physical machine or a virtual machine. The POD-PM is management software. The POD-PM may include a PM graphical user interface (graphical user interface, GUI) (PM-GUI for short), a PM data protection system (data protection system, DPS) (PM-DPS for short), and a PM base (PM-Base). A function of the ransomware detection module may be implemented by the POD-DEE. In other words, the ransomware detection method provided in this application may be deployed on the POD-DEE, and the POD-DEE performs ransomware detection. Alternatively, the ransomware detection module may be deployed in a conventional manner. For example, an application is deployed in the storage system in a form of a plug-in or a script, and the storage system runs the application program by using an operating system, to implement ransomware detection.

In the system shown in FIG. 1, the operating system built in the storage system directly performs ransomware detection.

For another example, FIG. 2 is a diagram of an architecture of another ransomware detection system according to an embodiment of this application. As shown in FIG. 2, the detection system includes a storage system and an external chip. The storage system includes a storage service module. Optionally, the storage system further includes a user alarm module. For specific descriptions of the storage service module and the user alarm module, refer to the embodiment shown in FIG. 1. Details are not described herein again in this embodiment of this application. The ransomware detection method provided in this application is deployed on the external chip. The external chip is connected to the storage system through a peripheral component interconnect express (peripheral component interconnect express, PCIE) interface, so that the storage system performs ransomware detection by using a computing power of the external chip. The external chip includes but is not limited to a data processing unit (data processing unit, DPU) chip, a central processing unit (central processing unit, CPU) chip, or a network processing unit (network processing unit, NPU) chip.

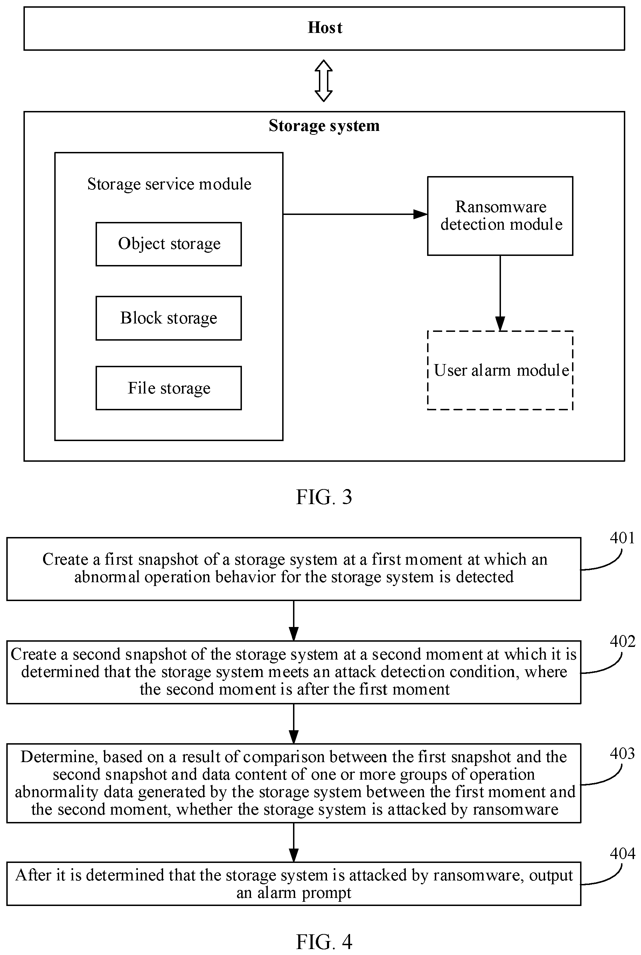

For another example, FIG. 3 is a diagram of an architecture of still another ransomware detection system according to an embodiment of this application. As shown in FIG. 3, the detection system includes a host and a storage system. The host is a device used by a user to interact with the storage system. For example, the host may perform an access operation on data in the storage system. The storage system may be the storage system shown in FIG. 1 or the storage system shown in FIG. 2. In FIG. 3, an example in which the storage system is the storage system shown in FIG. 1 is used for description. If the storage system in FIG. 3 is the storage system shown in FIG. 2, the detection system further includes an external chip.

Optionally, the storage system in this embodiment of this application may be a centralized storage system, or may be a distributed storage system. This is not limited herein.

The following describes a method procedure in embodiments of this application by using an example.

For example, FIG. 4 is a schematic flowchart of a ransomware detection method according to an embodiment of this application. The method is applied to a computer device, and the computer device may be a device in any form that has a computing capability. The computer device may be, for example, the storage system shown in FIG. 1, the external chip shown in FIG. 2, or the storage system shown in FIG. 3. As shown in FIG. 4, the method includes the following steps.

Step 401: Create a first snapshot of a storage system at a first moment at which an abnormal operation behavior for the storage system is detected.

The storage system may be the storage system shown in any one of FIG. 1 to FIG. 3. The abnormal operation behavior is also referred to as an abnormal I/O behavior. An operation on the storage system includes but is not limited to a read operation, a write operation, a rename operation, a create operation, or a delete operation. The read operation is used to read data from the storage system. The write operation is used to write data to the storage system in an overwrite manner. The rename operation is used to rename data or a file in the storage system. The create operation is used to create a file or a storage volume in the storage system to write new data. The delete operation is used to delete original data in the storage system.

Optionally, an implementation process of detecting an abnormal operation behavior for the storage system includes step 4011 and step 4012.

In step 4011, an operation sequence of a plurality of consecutive operations for one group of data in the storage system is obtained, where the plurality of consecutive operations include reading data, writing data, renaming data, creating new data, or deleting original data.

One group of data may be one file or one data block. Optionally, each operation on each group of data in the storage system may be recorded, to obtain an operation record. After a plurality of operation records for a same group of data in a period of time are obtained, an operation sequence of a plurality of consecutive operations for the group of data is generated based on a sequence of operations recorded in the plurality of operation records.

In step 4012, when the operation sequence matches a preset ransomware operation sequence pattern, the plurality of consecutive operations are determined as the abnormal operation behavior, and one group of data on which the plurality of consecutive operations have been performed is used as one group of operation abnormality data.

Optionally, the ransomware operation sequence may be obtained based on an actual ransomware behavior. One ransomware behavior usually includes a plurality of consecutive operations on a same group of data, for example, "read operation+rename operation+write operation", "read operation+write operation+rename operation", "read operation+create operation+delete operation", and "read operation+write operation", and a ransomware operation sequence may be generated and stored in advance based on these possible ransomware behaviors. That the operation sequence of the plurality of consecutive operations matches a preset ransomware operation sequence pattern may be that the operation sequence includes any one of preset ransomware operation sequences. In this embodiment of this application, data generated due to a detected abnormal operation behavior in the storage system is referred to as operation abnormality data.

Optionally, the computer device continuously detects an abnormal operation behavior for the storage system. The first moment may be a moment at which an abnormal operation behavior for the storage system is detected for the first time in a ransomware detection periodicity.

A snapshot is a fully usable copy of a data set. The snapshot includes an image of a corresponding data set at a time point (a copy start moment), and data corresponding to the data set at a moment may be queried based on a snapshot of the data set at the moment. The snapshot may be viewed as a copy of data or a replica of data. In this embodiment of this application, when an abnormal operation behavior for the storage system is detected, a snapshot of the storage system is quickly created. The snapshot may protect current data of the storage system, to avoid further damage to the data.

Optionally, if the storage system uses file storage as a storage manner, for example, uses network attached storage (network attached storage, NAS), creating a snapshot of the storage system means creating a snapshot of a file system. In this implementation, the first snapshot is a file system snapshot. Alternatively, if the storage system uses block storage as a storage manner, creating a snapshot of the storage system means creating a snapshot of data in the storage system. In this implementation, the first snapshot is a data snapshot, for example, a logical unit number (logical unit number, LUN) snapshot. Alternatively, if the storage system uses object storage as a storage manner, creating a snapshot of the storage system means creating a snapshot of data in the storage system. In this implementation, the first snapshot is a data snapshot, for example, a storage bucket snapshot.

Step 402: Create a second snapshot of the storage system at a second moment at which it is determined that the storage system meets an attack detection condition, where the second moment is after the first moment.

The first snapshot and the second snapshot are snapshots of a same storage system at different moments. For a definition of the second snapshot, refer to the foregoing definition of the first snapshot. Details are not described herein again in this embodiment of this application.

Optionally, that the storage system meets an attack detection condition includes: duration starting from the first moment reaches a duration threshold, or a quantity of abnormal operation behaviors for the storage system from the first moment reaches a quantity threshold. In other words, after creating the first snapshot of the storage system at the first moment, the computer device creates the second snapshot of the storage system after a quantity of abnormal operation behaviors for the storage system reaches a quantity threshold or duration reaches a duration threshold. The duration threshold herein may be at a minute level, an hour level, or the like, for example, is 20 minutes.

Optionally, after creating the second snapshot of the storage system at the second moment, the computer device may continue to detect an abnormal operation behavior for the storage system. The second moment may be used as an end moment of a current ransomware detection periodicity, or may be used as a start moment of a next ransomware detection periodicity. The method steps shown in FIG. 4 are steps performed by the computer device in one ransomware detection periodicity. In a possible implementation, after determining that the storage system is attacked by ransomware, the computer device may stop detecting an abnormal operation behavior for the storage system.

Step 403: Determine, based on a result of comparison between the first snapshot and the second snapshot and data content of one or more groups of operation abnormality data generated by the storage system between the first moment and the second moment, whether the storage system is attacked by ransomware.

One group of operation abnormality data is generated by one abnormal operation behavior for the storage system. In this embodiment of this application, the computer device immediately creates the first snapshot when detecting an abnormal operation behavior for the storage system, and continuously records operation abnormality data generated due to a subsequent abnormal operation behavior. The one or more groups of operation abnormality data generated by the storage system between the first moment and the second moment may include a group of operation abnormality data generated by the storage system at the first moment, or may not include a group of operation abnormality data generated by the storage system at the first moment.

Optionally, when the result of comparison between the first snapshot and the second snapshot meets a first abnormality condition, and at least one group of detection abnormality data exists in the one or more groups of operation abnormality data generated by the storage system between the first moment and the second moment, it is determined that the storage system is attacked by ransomware. Alternatively, when the result of comparison between the first snapshot and the second snapshot does not meet the first abnormality condition, or the one or more groups of operation abnormality data generated by the storage system between the first moment and the second moment are all detection normality data, it is determined that the storage system is not attacked by ransomware. One group of detection abnormality data is one group of operation abnormality data whose data content meets a second abnormality condition. One group of detection normality data is one group of operation abnormality data whose data content does not meet the second abnormality condition.

Optionally, the result of comparison between the first snapshot and the second snapshot includes a difference between an entropy value of the second snapshot and an entropy value of the first snapshot, and the first abnormality condition includes: the difference is greater than a difference threshold. In other words, that the result of comparison between the first snapshot and the second snapshot meets a first abnormality condition may be that the difference between the entropy value of the second snapshot and the entropy value of the first snapshot is greater than the difference threshold.

In this embodiment of this application, the entropy value is used to reflect data uncertainty. Larger data uncertainty indicates a higher entropy value. Uncertainty of encrypted data is higher than that of non-encrypted data. Therefore, an entropy value of the encrypted data is higher than that of the non-encrypted data. An encryption situation of data in the storage system in interval duration of generating two snapshots may be determined through comparison of entropy values of the snapshots of the storage system at different moments. If a difference between the entropy values of the two snapshots is greater than the difference threshold, it indicates that a large amount of data in the storage system is encrypted in the interval duration, and it is very likely that the storage system is attacked by ransomware. If the difference between the entropy values of the two snapshots is less than or equal to the difference threshold, even if the entropy values of the two snapshots are both large, it only indicates that there is a large amount of encrypted data in original data of the storage system, and it is not determined that the storage system is attacked by ransomware. This can avoid a misjudgment caused because the original data in the storage system is encrypted. In addition, when encrypting data in the storage system, a user usually does not encrypt a large amount of data in a short period of time, like ransomware. Therefore, an entropy value of a snapshot of the storage system does not increase rapidly in a short period of time, so that a misjudgment caused by a user encryption behavior can be very probably avoided through comparison between snapshots of the storage system at different moments.

Optionally, the computer device invokes a machine learning model to separately determine the entropy value of the first snapshot and the entropy value of the second snapshot. During specific implementation, the computer device may input a snapshot into the machine learning model, to obtain an entropy value of the snapshot that is output by the machine learning model. The machine learning model may be obtained through training based on a large amount of encrypted data and non-encrypted data, so that an entropy value that is output for the encrypted data is always greater than an entropy value that is output for the non-encrypted data.

Alternatively, the result of comparison between the first snapshot and the second snapshot may be represented by using another parameter, provided that a data encryption change degree of the first snapshot and the second snapshot can be reflected, for example, a suffix type change ratio may be used. A manner of expressing the result of comparison between the first snapshot and the second snapshot is not limited in this embodiment of this application.

Optionally, the second abnormality condition is that data content is encrypted. In other words, one group of operation abnormality data whose data content is encrypted is detection abnormality data. One group of operation abnormality data whose data content is not encrypted is one group of detection normality data. In step 403, for one group of operation abnormality data in the one or more groups of operation abnormality data generated by the storage system between the first moment and the second moment, the computer device may determine, based on data content of the operation abnormality data, whether the operation abnormality data is encrypted data; and if the operation abnormality data is encrypted data, determine that the operation abnormality data is detection abnormality data; or if the operation abnormality data is not encrypted data, determine that the operation abnormality data is detection normality data.

In a possible implementation, the computer device inputs a local content feature of a group of operation abnormality data into the trained machine learning model for encryption state detection, to obtain a detection result that is output by the machine learning model, where the detection result indicates that the data is encrypted or the data is not encrypted. The machine learning model may be a binary classification model obtained through pre-training.

Alternatively, an entropy value may be used to indicate whether data content is encrypted. If an entropy value of a group of operation abnormality data is greater than an entropy threshold, it indicates that the operation abnormality data is encrypted, and it may be further determined that the operation abnormality data is detection abnormality data. If an entropy value of a group of operation abnormality data is less than or equal to the entropy threshold, it indicates that the operation abnormality data is not encrypted, and it may be further determined that the operation abnormality data is detection normality data. Correspondingly, the second abnormality condition may be set as follows: An entropy value of operation abnormality data is greater than the entropy threshold.

In this embodiment of this application, the computer device may determine, based on data content of operation abnormality data, whether the operation abnormality data is encrypted data; and if the operation abnormality data is encrypted data, determine that the storage system may be attacked by ransomware.

Optionally, the computer device may determine in real time whether operation abnormality data generated due to an abnormal operation behavior for the storage system is detection abnormality data; and if no detection abnormality data exists in the one or more groups of operation abnormality data generated by the storage system between the first moment and the second moment, the computer device does not need to compare the first snapshot with the second snapshot. Alternatively, after generating the second snapshot, the computer device may first compare the first snapshot with the second snapshot; and when the result of comparison between the first snapshot and the second snapshot meets the first abnormality condition, the computer device determines whether the operation abnormality data generated by the storage system between the first moment and the second moment is detection abnormality data; or if the result of comparison between the first snapshot and the second snapshot does not meet the first abnormality condition, the computer device does not need to determine the operation abnormality data. The foregoing two implementations can save processing resources of the computer device to some extent.

Alternatively, after generating the second snapshot, the computer device may simultaneously compare the first snapshot with the second snapshot and determine whether the operation abnormality data generated by the storage system between the first moment and the second moment is detection abnormality data. This implementation can improve ransomware detection efficiency.

Optionally, after determining that the storage system is attacked by ransomware, the computer device may store the first snapshot, and delete the second snapshot.

In this embodiment of this application, after determining that the storage system is attacked by ransomware, the computer device may store, as a secure snapshot, the first snapshot that is first generated. In this way, data that is damaged after the first moment can be protected, and data security protection is implemented by backing up data of the storage system. The secure snapshot may be a snapshot that only a system security administrator has an operation permission.

Optionally, after determining that the storage system is not attacked by ransomware, the computer device deletes the first snapshot and the second snapshot. Snapshot deletion can release storage space and reduce storage resource usage.

Optionally, the computer device may further perform step 404.

Step 404: After determining that the storage system is attacked by ransomware, output an alarm prompt.

The alarm prompt indicates that the storage system is attacked by ransomware. The alarm prompt includes one or more of a tenant name of the detection abnormality data, a storage location of the detection abnormality data, or an infection time of the detection abnormality data. If the storage system uses a file storage manner, a storage location may be expressed by using "file system+file path name+file name". If the storage system uses a block storage manner, a storage location may be expressed by using an LUN. If the storage system uses an object storage manner, a storage location may be expressed by using a bucket name (bucket name). The infection time of the detection abnormality data may be a time at which the operation abnormality data is determined as the detection abnormality data.

Optionally, that the computer device outputs an alarm prompt may be that the computer device displays the alarm prompt, or may be that the computer device sends the alarm prompt to another display device for display by the another display device.

In this embodiment of this application, after determining that the storage system is attacked by ransomware, the computer device may output the alarm prompt, so that an operation and maintenance engineer or the user quickly locates an attacked object, and performs security protection on data to cope with the ransomware attack.

In the ransomware detection method provided in this embodiment of this application, whether the storage system is attacked by ransomware is comprehensively determined based on comparison between snapshots of the storage system at different moments and data content of operation abnormality data generated due to a single abnormal operation behavior. Based on the data content of the operation abnormality data, it may be determined whether the operation abnormality data meets a condition of being attacked by ransomware. If the operation abnormality data meets the condition of being attacked by ransomware, it is determined that the storage system may be attacked by ransomware. That the operation abnormality data meets the condition of being attacked by ransomware may mean that the operation abnormality data is encrypted data. In addition, ransomware usually attacks one storage system a plurality of times within a short period of time, causing a large amount of data in the storage system to be infected. Therefore, comparison between snapshots of the storage system at different moments can assist in determining, based on an overall data change in the storage system within a period of time, whether a ransomware attack behavior, a data feature, or a user encryption behavior causes operation abnormality data to meet the condition of being attacked by ransomware. In the solution of this application, a ransomware attack behavior can be effectively detected, and false ransomware detection can also be reduced. Compared with the conventional technology, this improves ransomware detection accuracy and reliability.

A sequence of the steps of the ransomware detection method provided in this embodiment of this application can be properly adjusted, and the steps can also be correspondingly added or deleted based on a situation. Any method variation readily figured out by any person skilled in the art within the technical scope disclosed in this application shall fall within the protection scope of this application.

The following describes a virtual apparatus in an embodiment of this application by using an example.

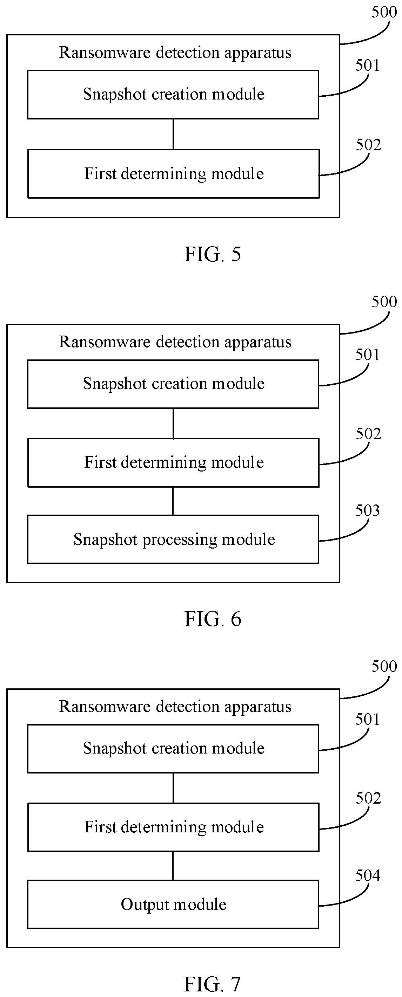

For example, FIG. 5 is a diagram of a structure of a ransomware detection apparatus according to an embodiment of this application. As shown in FIG. 5, the apparatus 500 includes a snapshot creation module 501 and a first determining module 502.

The snapshot creation module 501 is configured to create a first snapshot of a storage system at a first moment at which an abnormal operation behavior for the storage system is detected.

The snapshot creation module 501 is further configured to create a second snapshot of the storage system at a second moment at which it is determined that the storage system meets an attack detection condition, where the second moment is after the first moment.

The first determining module 502 is configured to determine, based on a result of comparison between the first snapshot and the second snapshot and data content of one or more groups of operation abnormality data generated by the storage system between the first moment and the second moment, whether the storage system is attacked by ransomware, where one group of operation abnormality data is generated by one abnormal operation behavior for the storage system.

Optionally, that the storage system meets an attack detection condition includes: duration starting from the first moment reaches a duration threshold, or a quantity of abnormal operation behaviors for the storage system from the first moment reaches a quantity threshold.

Optionally, the first determining module 502 is specifically configured to: when the comparison result meets a first abnormality condition, and at least one group of detection abnormality data exists in the one or more groups of operation abnormality data, determine that the storage system is attacked by ransomware, where one group of detection abnormality data is one group of operation abnormality data whose data content meets a second abnormality condition.

Optionally, the first determining module 502 is specifically configured to: when the comparison result does not meet a first abnormality condition, or the one or more groups of operation abnormality data are all detection normality data, determine that the storage system is not attacked by ransomware, where one group of detection normality data is one group of operation abnormality data whose data content does not meet a second abnormality condition.

Optionally, as shown in FIG. 6, the apparatus 500 further includes a snapshot processing module 503.

In a possible implementation, the snapshot processing module 503 is configured to: after it is determined that the storage system is attacked by ransomware, store the first snapshot, and delete the second snapshot.

In another possible implementation, the snapshot processing module 503 is configured to: after it is determined that the storage system is not attacked by ransomware, delete the first snapshot and the second snapshot.

Optionally, as shown in FIG. 7, the apparatus 500 further includes: an output module 504, configured to: after it is determined that the storage system is attacked by ransomware, output an alarm prompt, where the alarm prompt indicates that the storage system is attacked by ransomware, and the alarm prompt includes one or more of a tenant name of the detection abnormality data, a storage location of the detection abnormality data, or an infection time of the detection abnormality data.

Optionally, the comparison result includes a difference between an entropy value of the second snapshot and an entropy value of the first snapshot, and the first abnormality condition includes: the difference is greater than a difference threshold.

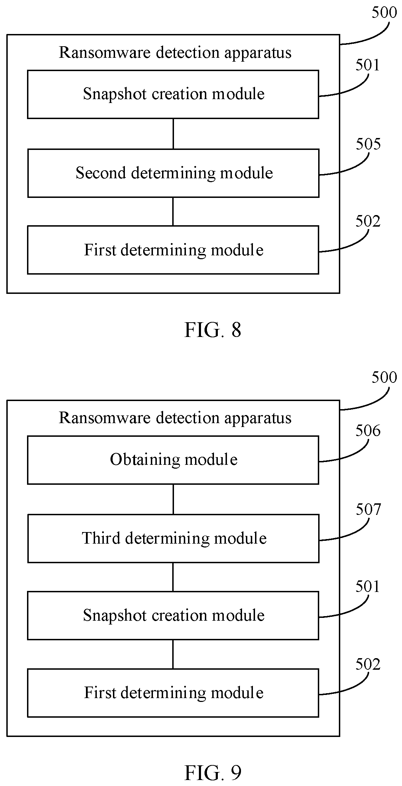

Optionally, as shown in FIG. 8, the apparatus 500 further includes a second determining module 505, configured to invoke a machine learning model to separately determine the entropy value of the first snapshot and the entropy value of the second snapshot.

Optionally, the second abnormality condition is that data content is encrypted.

Optionally, as shown in FIG. 9, the apparatus 500 further includes: an obtaining module 506, configured to obtain an operation sequence of a plurality of consecutive operations for one group of data in the storage system, where the plurality of consecutive operations include a read operation, a write operation, a rename operation, a create operation, or a delete operation; and a third determining module 507, configured to: when the operation sequence matches a preset ransomware operation sequence pattern, determine the plurality of consecutive operations as the abnormal operation behaviors, and use one group of data on which the plurality of consecutive operations have been performed as one group of operation abnormality data.

For the apparatus in the foregoing embodiment, specific manners of executing operations by the modules are described in detail in embodiments related to the method, and details are not described herein.

The following describes a basic hardware structure in an embodiment of this application by using an example.

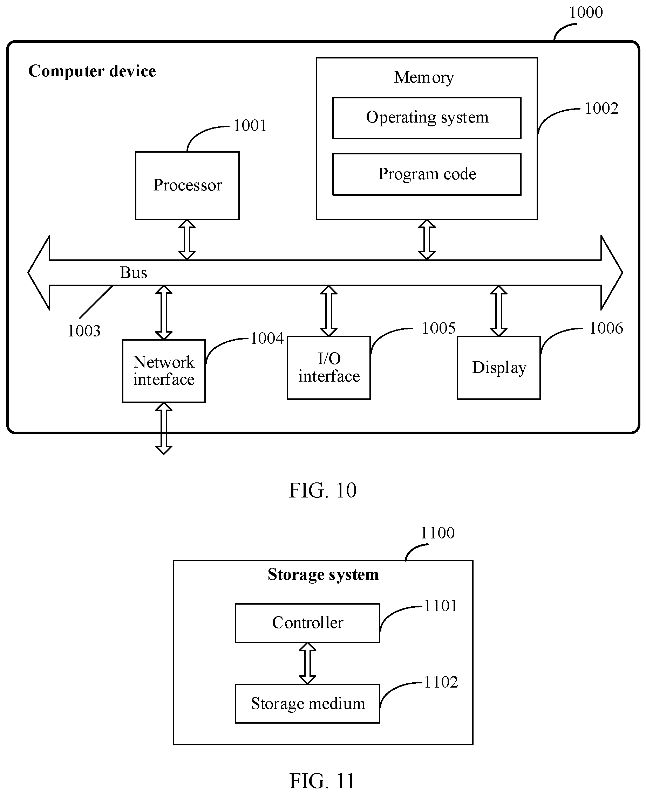

For example, FIG. 10 is a diagram of a hardware structure of a computer device according to an embodiment of this application. As shown in FIG. 10, the computer device 1000 includes a processor 1001 and a memory 1002, and the memory 1001 and the memory 1002 are connected by using a bus 1003. FIG. 10 is described by using an example in which the processor 1001 and the memory 1002 are independent of each other. Optionally, the processor 1001 and the memory 1002 are integrated together. The computer device 1000 may be, for example, a storage system.

The memory 1002 is configured to store a computer program. The computer program includes an operating system and program code. The memory 1002 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 1001 is a general-purpose processor, a special-purpose processor, or the like. The processor 1001 may be a single-core processor or a multi-core processor. The processor 1001 includes at least one circuit, to perform the ransomware detection method provided in the embodiment of this application.

Optionally, the computer device 1000 further includes a network interface 1004, and the network interface 1004 is connected to the processor 1001 and the memory 1002 by using the bus 1003. The network interface 1004 can implement communication between the computer device 1000 and another device.

Optionally, the computer device 1000 further includes an input/output (input/output, I/O) interface 1005, and the I/O interface 1005 is connected to the processor 1001 and the memory 1002 by using the bus 1003. The processor 1001 can receive an input command, data, or the like through the I/O interface 1005. The I/O interface 1005 is configured to connect the computer device 1000 to an input device. The input device is, for example, a keyboard or a mouse. Optionally, in some possible scenarios, the network interface 1004 and the I/O interface 1005 are collectively referred to as a communication interface.

Optionally, the computer device 1000 further includes a display 1006, and the display 1006 is connected to the processor 1001 and the memory 1002 by using the bus 1003. The display 1006 can be configured to display an intermediate result and/or a final result generated by the processor 1001 by performing the foregoing method, for example, display an alarm prompt. In a possible implementation, the display 1006 is a touchscreen, to provide a man-machine interaction interface.

The bus 1003 is a communication bus of any type configured to implement an interconnection between internal components of the computer device 1000, for example, a system bus. In this embodiment of this application, an example in which the foregoing internal components of the computer device 1000 are interconnected by using the bus 1003 is used for description. Optionally, communication connections between the foregoing internal components of the computer device 1000 are implemented by using another connection manner other than the bus 1003. For example, the foregoing internal components of the computer device 1000 are interconnected through a logical interface inside the computer device 1000.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The computer device 1000 shown in FIG. 10 is merely an example. In an implementation process, the computer device 1000 may further include other components, which are not enumerated in this specification. The computer device 1000 shown in FIG. 10 may implement intelligent ransomware detection by performing all or some steps of the method provided in the foregoing embodiment.

An embodiment of this application further provides a storage system. For example, FIG. 11 is a diagram of a structure of a storage system according to an embodiment of this application. As shown in FIG. 11, the storage system 1100 includes a controller 1101 and a storage medium 1102. The storage medium 1102 is configured to store data. The controller 1101 is configured to read the data from the storage medium, and perform all or some steps of the method provided in the foregoing embodiment to perform ransomware detection.

An embodiment of this application further provides a computer-readable storage medium. The computer-readable storage medium stores instructions. When the instructions are executed by a processor, the ransomware detection method shown in FIG. 4 is implemented.

An embodiment of this application further provides a computer program product, including a computer program. When the computer program is executed by a processor, the ransomware detection method shown in FIG. 4 is implemented.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, terms "first", "second", and "third" are merely used for description, but cannot be understood as indications or implications of relative importance.

A term "and/or" in this application describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A ransomware detection method, wherein the method comprises:
creating a first snapshot of a storage system at a first moment at which an abnormal operation behavior for the storage system is detected;
creating a second snapshot of the storage system at a second moment at which it is determined that the storage system meets an attack detection condition, wherein the second moment is after the first moment; and
determining, based on a result of comparison between the first snapshot and the second snapshot and data content of one or more groups of operation abnormality data generated by the storage system between the first moment and the second moment, whether the storage system is attacked by ransomware, wherein one group of operation abnormality data is generated by one abnormal operation behavior for the storage system.

2. The method according to claim 1, wherein that the storage system meets an attack detection condition comprises: duration starting from the first moment reaches a duration threshold, or a quantity of abnormal operation behaviors for the storage system from the first moment reaches a quantity threshold.

3. The method according to claim 1 or 2, wherein the determining, based on a result of comparison between the first snapshot and the second snapshot and data content of one or more groups of operation abnormality data generated by the storage system between the first moment and the second moment, whether the storage system is attacked by ransomware comprises:
when the comparison result meets a first abnormality condition, and at least one group of detection abnormality data exists in the one or more groups of operation abnormality data, determining that the storage system is attacked by ransomware, wherein one group of detection abnormality data is one group of operation abnormality data whose data content meets a second abnormality condition.

4. The method according to claim 3, wherein after the determining that the storage system is attacked by ransomware, the method further comprises:
storing the first snapshot, and deleting the second snapshot.

5. The method according to claim 3 or 4, wherein after the determining that the storage system is attacked by ransomware, the method further comprises:
outputting an alarm prompt, wherein the alarm prompt indicates that the storage system is attacked by ransomware, and the alarm prompt comprises one or more of a tenant name of the detection abnormality data, a storage location of the detection abnormality data, or an infection time of the detection abnormality data.

6. The method according to claim 1 or 2, wherein the determining, based on a result of comparison between the first snapshot and the second snapshot and data content of one or more groups of operation abnormality data generated by the storage system between the first moment and the second moment, whether the storage system is attacked by ransomware comprises:
when the comparison result does not meet a first abnormality condition, or the one or more groups of operation abnormality data are all detection normality data, determining that the storage system is not attacked by ransomware, wherein one group of detection normality data is one group of operation abnormality data whose data content does not meet a second abnormality condition.

7. The method according to claim 6, wherein after the determining that the storage system is not attacked by ransomware, the method further comprises:
deleting the first snapshot and the second snapshot.

8. The method according to any one of claims 3 to 7, wherein the comparison result comprises a difference between an entropy value of the second snapshot and an entropy value of the first snapshot, and the first abnormality condition comprises: the difference is greater than a difference threshold.

9. The method according to claim 8, wherein the method further comprises:
invoking a machine learning model to separately determine the entropy value of the first snapshot and the entropy value of the second snapshot.

10. The method according to any one of claims 3 to 9, wherein the second abnormality condition is that data content is encrypted.

11. The method according to any one of claims 1 to 10, wherein the method further comprises:
obtaining an operation sequence of a plurality of consecutive operations for one group of data in the storage system, wherein the plurality of consecutive operations comprise a read operation, a write operation, a rename operation, a create operation, or a delete operation; and
when the operation sequence matches a preset ransomware operation sequence pattern, determining the plurality of consecutive operations as the abnormal operation behaviors, and using one group of data on which the plurality of consecutive operations have been performed as one group of operation abnormality data.

12. A ransomware detection apparatus, wherein the apparatus comprises:
a snapshot creation module, configured to create a first snapshot of a storage system at a first moment at which an abnormal operation behavior for the storage system is detected, wherein
the snapshot creation module is further configured to create a second snapshot of the storage system at a second moment at which it is determined that the storage system meets an attack detection condition, wherein the second moment is after the first moment; and
a first determining module, configured to determine, based on a result of comparison between the first snapshot and the second snapshot and data content of one or more groups of operation abnormality data generated by the storage system between the first moment and the second moment, whether the storage system is attacked by ransomware, wherein one group of operation abnormality data is generated by one abnormal operation behavior for the storage system.

13. The apparatus according to claim 12, wherein that the storage system meets an attack detection condition comprises: duration starting from the first moment reaches a duration threshold, or a quantity of abnormal operation behaviors for the storage system from the first moment reaches a quantity threshold.

14. The apparatus according to claim 12 or 13, wherein the first determining module is configured to:
when the comparison result meets a first abnormality condition, and at least one group of detection abnormality data exists in the one or more groups of operation abnormality data, determine that the storage system is attacked by ransomware, wherein one group of detection abnormality data is one group of operation abnormality data whose data content meets a second abnormality condition.

15. The apparatus according to claim 14, wherein the apparatus further comprises:
a snapshot processing module, configured to: after it is determined that the storage system is attacked by ransomware, store the first snapshot, and delete the second snapshot.

16. The apparatus according to claim 14 or 15, wherein the apparatus further comprises:
an output module, configured to: after it is determined that the storage system is attacked by ransomware, output an alarm prompt, wherein the alarm prompt indicates that the storage system is attacked by ransomware, and the alarm prompt comprises one or more of a tenant name of the detection abnormality data, a storage location of the detection abnormality data, or an infection time of the detection abnormality data.

17. The apparatus according to claim 12 or 13, wherein the first determining module is configured to:
when the comparison result does not meet a first abnormality condition, or the one or more groups of operation abnormality data are all detection normality data, determine that the storage system is not attacked by ransomware, wherein one group of detection normality data is one group of operation abnormality data whose data content does not meet a second abnormality condition.

18. The apparatus according to claim 17, wherein the apparatus further comprises:
a snapshot processing module, configured to: after it is determined that the storage system is not attacked by ransomware, delete the first snapshot and the second snapshot.

19. The apparatus according to any one of claims 14 to 18, wherein the comparison result comprises a difference between an entropy value of the second snapshot and an entropy value of the first snapshot, and the first abnormality condition comprises: the difference is greater than a difference threshold.

20. The apparatus according to claim 19, wherein the apparatus further comprises:
a second determining module, configured to invoke a machine learning model to separately determine the entropy value of the first snapshot and the entropy value of the second snapshot.

21. The apparatus according to any one of claims 14 to 20, wherein the second abnormality condition is that data content is encrypted.

22. The apparatus according to any one of claims 12 to 21, wherein the apparatus further comprises:
an obtaining module, configured to obtain an operation sequence of a plurality of consecutive operations for one group of data in the storage system, wherein the plurality of consecutive operations comprise a read operation, a write operation, a rename operation, a create operation, or a delete operation; and
a third determining module, configured to: when the operation sequence matches a preset ransomware operation sequence pattern, determine the plurality of consecutive operations as the abnormal operation behavior, and use one group of data on which the plurality of consecutive operations have been performed as one group of operation abnormality data.

23. A computer device, comprising a processor and a memory, wherein
the memory is configured to store a computer program, wherein the computer program comprises program instructions; and
the processor is configured to invoke the computer program, to implement the method according to any one of claims 1 to 11.

24. A computer-readable storage medium, wherein the computer-readable storage medium stores instructions, and when the instructions are executed by a processor, the method according to any one of claims 1 to 11 is implemented.

25. A computer program product, comprising a computer program, wherein when the computer program is executed by a processor, the method according to any one of claims 1 to 11 is implemented.
